# EUROPÄISCHE PATENTSCHRIFT

(11) **EP 1 720 089 B1**
(45) Veröffentlichungstag und Bekanntmachung des Hinweises auf die Patenterteilung: **13.03.2013**
(21) Anmeldenummer: 06009268.1
(22) Anmeldetag: 04.05.2006
(51) Int. Cl.: G06F 1/18

(54) **Computergehäuse und Computeranordnung**
Computer case and computer system
Boîtier d'ordinateur et agencement d'ordinateur

(30) Priorität: 04.05.2005 DE 102005020910
(43) Veröffentlichungstag der Anmeldung: 08.11.2006
(73) Patentinhaber: Fujitsu Technology Solutions Intellectual Property GmbH, 80807 München (DE)
(72) Erfinder: Neukam, Wilhelm, 86399 Bobingen (DE)
(74) Vertreter: Epping - Hermann - Fischer

(56) Entgegenhaltungen:
- EP-A2- 0 816 975

## Beschreibung

Die Erfindung betrifft ein Computergehäuse mit einer Gehäuseseite, die wenigstens eine Aussparung zum Einsetzen eines Erweiterungsmoduls aufweist, und einem abnehmbaren Gehäusedeckel. Die Erfindung betrifft des Weiteren eine Verwendung eines derartigen Computergehäuses in einer Computeranordnung, die das Computergehäuse, eine Hauptplatine und wenigstens ein Erweiterungsmodul aufweist.

Computergehäuse mit Aussparungen für einsetzbare Erweiterungsmodule sind vielfach bekannt. Beispielsweise weisen die meisten Personalcomputer (PCs) Einsteckkarten mit einem damit verbundenem Slotblech auf, das ein Herausführen von auf der Einsteckkarte erzeugten Signalen aus dem Computergehäuse ermöglicht. Ungenützte Aussparungen für Einsteckkarten müssen durch passende Slotbleche abgedeckt werden, sodass keine elektromagnetische Störstrahlung aus dem Gehäuse entweichen kann.

In vielen bekannten Computergehäusen werden Erweiterungsmodule bzw. Slotbleche durch Schrauben mit dem Gehäuse verbunden. Dies stellt eine sichere elektrische Verbindung zwischen dem Slotblech und dem Gehäuse dar, hat jedoch den Nachteil, dass beim Einbau oder Wechsel eingebauter Erweiterungsmodule ein Schraubenzieher oder ähnliches Werkzeug benötigt wird. Dadurch gestaltet sich ein Umbau verhältnismäßig aufwändig. Des Weiteren ist es nachteilhaft, dass die zur Befestigung verwendeten Schrauben versehentlich in das Innere des Computergehäuses gelangen können und dort möglicherweise Kurzschlüsse verursachen.

Zusätzlich muss beim Einbau oder Austausch von Erweiterungsmodulen auch das Computergehäuse geöffnet werden. Computergehäuse, deren Gehäusedeckel fest mit dem restlichen Gehäuse verschraubt sind, weisen dieselben Probleme wie verschraubte Erweiterungsmodule bzw. Slotbleche auf, nämlich dass ein Werkzeug für deren Demontage benötigt wird und dass verwendeten Schrauben verloren gehen und Kurzschlüsse verursachen können.

Einige Gehäusedeckel werden deshalb mit Schnapp- oder Rastmechanismen mit einem Gehäuse verbunden, sodass zumindest zum Öffnen des Gehäusedeckels kein Werkzeug und keine Schrauben mehr benötigt werden. Für den Fall, dass Erweiterungsmodule eingebaut oder getauscht werden sollen, wird jedoch weiterhin ein Werkzeug benötigt.

Aus der EP 0816 975 A2 ist eine Schiebehalterung für eine PCI-Erweiterungskarte bekannt. Ein dort beschriebenes Computergehäuse weist eine Einfassungsplatte und einen Halter mit einer Schiene und einem Gleiter auf. Die Schiene ist an der Einfassungsplatte festgelegt, und der Gleiter ist beweglich entlang der Schiene zwischen einer ersten Position zum Halten einer Abdeckung an der Platte und einer zweiten Position beweglich.

Der Erfindung liegt die Aufgabe zu Grunde, ein Computergehäuse zu beschreiben, bei dem ein besonders einfacher Einbau bzw. Austausch von Erweiterungsmodulen möglich ist. Dabei soll ein solcher Umbau keine Werkzeuge erfordern und schnell durchzuführen sein.

Die Aufgabe wird durch ein Computergehäuse der eingangs genannten Art gelöst, das dadurch gekennzeichnet ist, dass das Computergehäuse einen Riegel mit einem ersten Halteelement und einem zweiten Halteelement aufweist, der in einem verriegelten Zustand sowohl mittels des ersten Halteelements ein in die Aussparung eingesetztes Erweiterungsmodul als auch mittels dem zweiten Halteelement den Gehäusedeckel verriegelt, sodass ein in die Aussparung eingesetztes Erweiterungsmodul und der Gehäusedeckel mit dem Gehäuse verbunden sind, und der in einem entriegelten Zustand sowohl ein in die Aussparung eingesetztes Erweiterungsmodul als auch den Gehäusedeckel freigibt, sodass diese aus dem Gehäuse entfernt werden können.

Erfindungsgemäß werden eingebaute Erweiterungsmodule, wie beispielsweise Einsteckkarten, zusammen mit dem Entriegeln des Gehäusedeckels entriegelt. Dadurch ist kein zusätzliches Lösen von Schrauben in dem geöffneten Computergehäuse nötig, sodass eingebaute Erweiterungsmodule unmittelbar nach Öffnen des Gehäuses entnommen werden können. Umgekehrt werden nach dem Schließen des Gehäuses mit einem anschließenden Verriegeln des Gehäusedeckels auch die eingebauten Erweiterungsmodule verriegelt. Ein separates Befestigen der eingebauten Erweiterungsmodule ist nicht nötig, sodass dies auch nicht vergessen werden kann. Eingebaute Erweiterungsmodule sind bei verriegeltem Gehäusedeckel stets mit dem Gehäuse verbunden.

In einer vorteilhaften Ausgestaltung der Erfindung weist der Riegel einen Schieber mit einem Hebel auf, wobei der Schieber mit dem Hebel auf einer Gehäuseaußenseite angeordnet ist, so dass ein Verriegeln bzw. Entriegeln von außen leicht möglich ist.

In einer weiteren vorteilhaften Ausgestaltung weist der Riegel ein Rastelement auf, sodass der Riegel sicher in dem verriegelten Zustand verrastet werden kann. Bei den vorgesehenen Erweiterungsmodulen handelt es sich in der Regel entweder um einsteckbare Erweiterungskarten oder einsteckbare Slotabdeckungen, die fehlende Erweiterungskarten ersetzen. Beispielsweise kann es sich um PCI- oder AGP-Erweiterungskarten handeln.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
Figur 1 eine Innenansicht einer ersten Ausgestaltung eines erfindungsgemäßen Computergehäuses im verriegelten Zustand,
Figur 2 eine Innenansicht der ersten Ausgestaltung des erfindungsgemäßen Computergehäuses im entriegelten Zustand,
Figur 3 eine Rückansicht der ersten Ausgestaltung des erfindungsgemäßen Computergehäuses,
Figur 4 eine Rückansicht einer zweiten Ausgestaltung eines erfindungsgemäßen Computergehäuses,
Figur 5 eine Innenansicht der zweiten Ausgestaltung eines erfindungsgemäßen Computergehäuses im verriegelten Zustand,
Figur 6 eine Innenansicht der zweiten Ausgestaltung des erfindungsgemäßen Computergehäuses im teilverriegelten Zustand,
Figur 7 eine Innenansicht der zweiten Ausgestaltung des erfindungsgemäßen Computergehäuses im entriegelten Zustand.

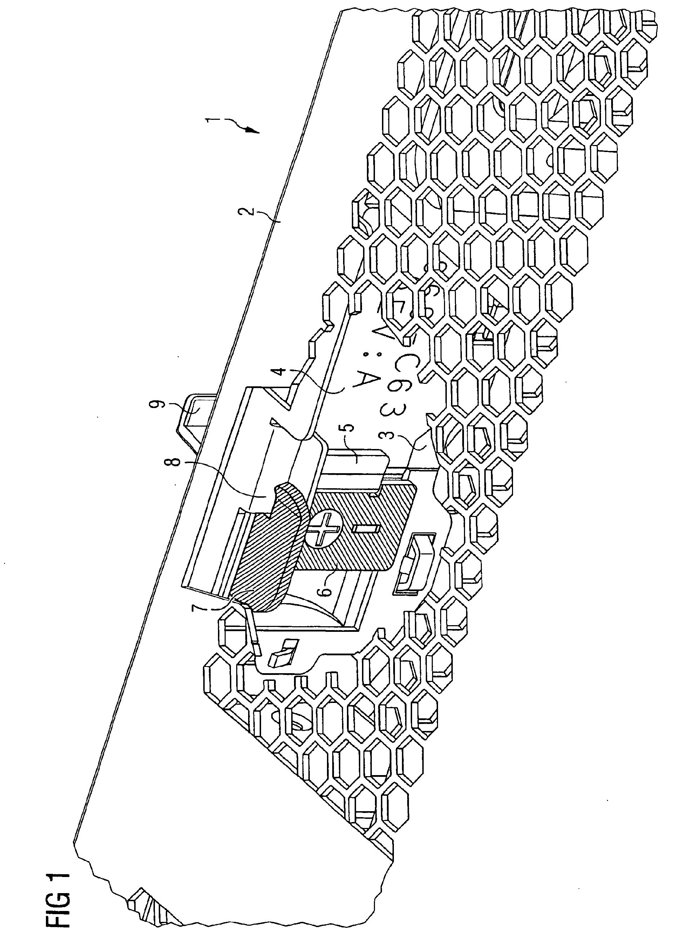

Figur 1 zeigt ein Computergehäuse 1 mit einem abnehmbaren Gehäusedeckel 2 und einer Gehäuserückseite 3. In einer in Figur 1 verdeckten Aussparung in der Gehäuserückseite 3 ist ein Slotblech 4 eingesteckt. Das Slotblech 4 wird durch ein erstes Halteelement 5 eines Riegels 6 in dem Computergehäuse 1 gehalten. Dabei drückt das erste Halteelement 5 in Verbindung mit dem Riegel 6 das Slotblech 4 gleichzeitig nach rechts sowie an die Gehäuserückseite 3, sodass das Slotblech 4 elektrisch mit dem Computergehäuse 1 verbunden ist. Der Riegel 6 weist zusätzlich ein zweites Halteelement 7 auf. In dem dargestellten verriegelten Zustand greift das zweite Halteelement 7 unter eine Z-förmige Lasche 8 des Gehäusedeckels 2. Des Weiteren ist der Riegel 6 mit einem Hebel 9 an einer Außenseite des Computergehäuses 1 verbunden.

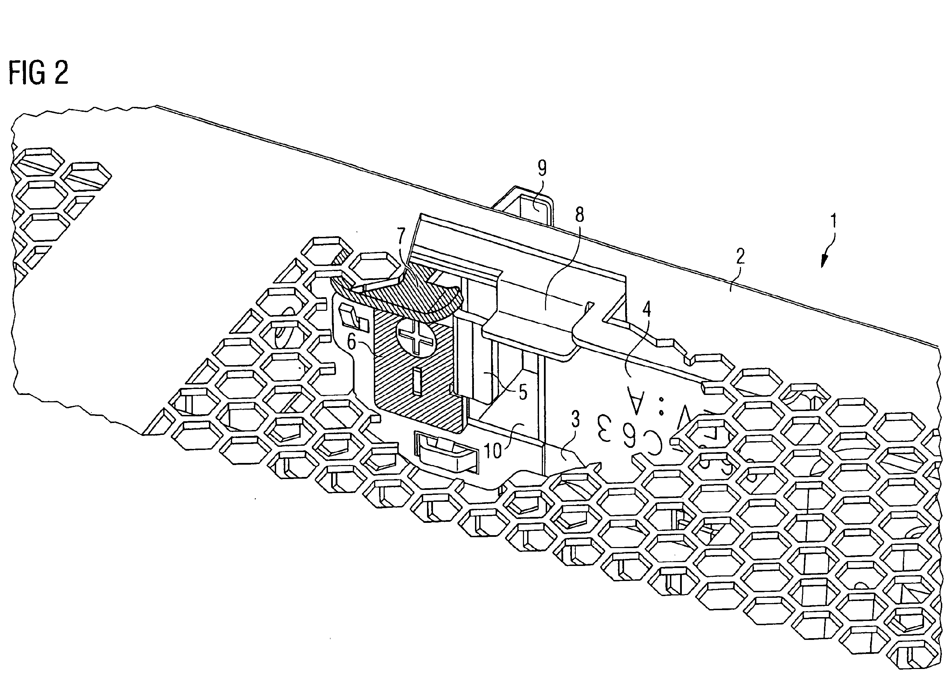

In der Figur 2 wurde der Hebel 9 von rechts nach links verschoben, sodass der Riegel 6 sich nun in einem entriegelten Zustand befindet. Mit dem Riegel 6 wurde das zweite Halteelement 7 so weit nach links zurückgezogen, dass die Lasche 8 nun nicht mehr durch das zweite Halteelement 7 verriegelt wird. Hierdurch ist ein Abnehmen oder Aufklappen des Gehäusedeckels 2 nach oben möglich.

Des Weiteren wurde mit dem Riegel 6 auch das erste Halteelement 5 nach links verschoben. Durch das Zurückziehen des Hebels 9 wurde die Aussparung 10, in die das Slotblech 4 eingesetzt ist, vergrößert. Das Slotblech 4 kann nun einfach durch ein Herausziehen nach links aus dem Computergehäuse 1 entnommen werden.

In den Figuren 1 und 2 ist der Einfachheit halber nur das Slotblech 4 einer Erweiterungskarte dargestellt. Üblicherweise umfasst eine Erweiterungskarte außer dem Slotblech 4 jedoch auch eine Platine, die in einen ebenfalls nicht dargestellten Steckverbinder einer Hauptplatine des Computers eingesteckt ist. In einer solchen Anordnung würde die Erweiterungskarte durch das Herausziehen des Slotbleches 4 nach links gleichzeitig aus dem Steckverbinder gelöst werden, sodass sie aus dem Computergehäuse 1 entnommen werden kann.

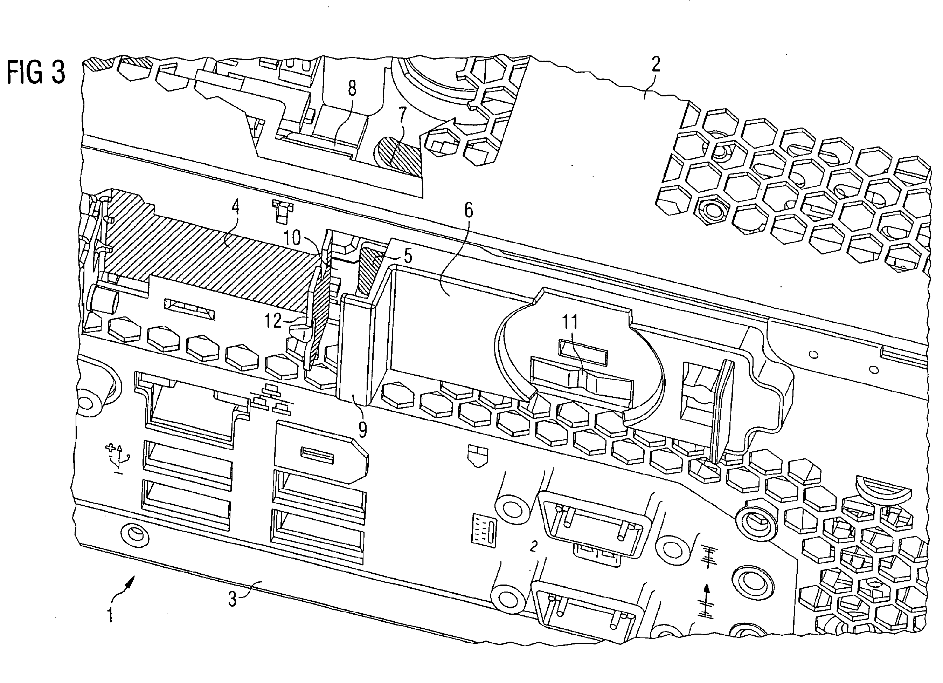

Figur 3 zeigt die Rückansicht des Computergehäuses 1, wiederum im entriegelten Zustand. In der Figur 3 ist ein mit dem Slotblech 4 verbundener Slotblechwinkel 12 zu erkennen, der in der gezeigten Ausgestaltung durch den Hebel 9 verriegelt werden kann. In der Zeichnung ist zu erkennen, dass der Slotblechwinkel 12 sicher zwischen dem ersten Halteelement 5 und dem Hebel 9 fixiert wird, wenn der Hebel 9 in der Figur 3 nach links verschoben wird.

Des Weiteren ist in der Figur 3 ein Rastelement 11 zu sehen, das mit dem Riegel 6 verbunden ist. Das Rastelement 11 dient dazu, mit einem in der Figur 3 durch den Riegel 6 verdeckten Gegenrastelement zu verrasten, wenn der Riegel 6 in dem verriegelten Zustand ist. Selbstverständlich kann das Rastelement 11 auch mit einem weiteren Gegenrastelement verrastet werden, wenn sich der Riegel 6 in dem dargestellten entriegelten Zustand befindet.

In einer vorteilhaften Ausgestaltung der Erfindung sind der Riegel 6 und das erste und das zweite Halteelement 5 und 7 aus Metall, sodass das Computergehäuse 1 auch im Bereich des Riegels 6 elektromagnetisch abgeschlossen ist. Des Weiteren stellt ein metallischer Riegel 6 eine sichere Erdungsverbindung zwischen dem Computergehäuse 1, dem Slotblech 4 sowie dem Gehäusedeckel 2 her.

Selbstverständlich kann das erfindungsgemäße Verriegelungselement 6 auch in Computergehäusen 1 mit mehreren Aussparungen für Erweiterungsmodule eingesetzt werden. In diesem Fall ist je ein Haltelement 5 je gehaltenem Erweiterungsmodul vorzusehen.

Bei den einbaubaren Erweiterungsmodulen kann es sich beispielsweise um austauschbare Grafik- oder Soundkarten handeln oder auch um Erweiterungskarten, die zusätzliche Schnittstellen für den Computer bereitstellen. Aber auch eine Verrieglung anderer Erweitungsmodule, wie beispielsweise eines Netzteils oder zusätzlicher Laufwerke ist möglich.

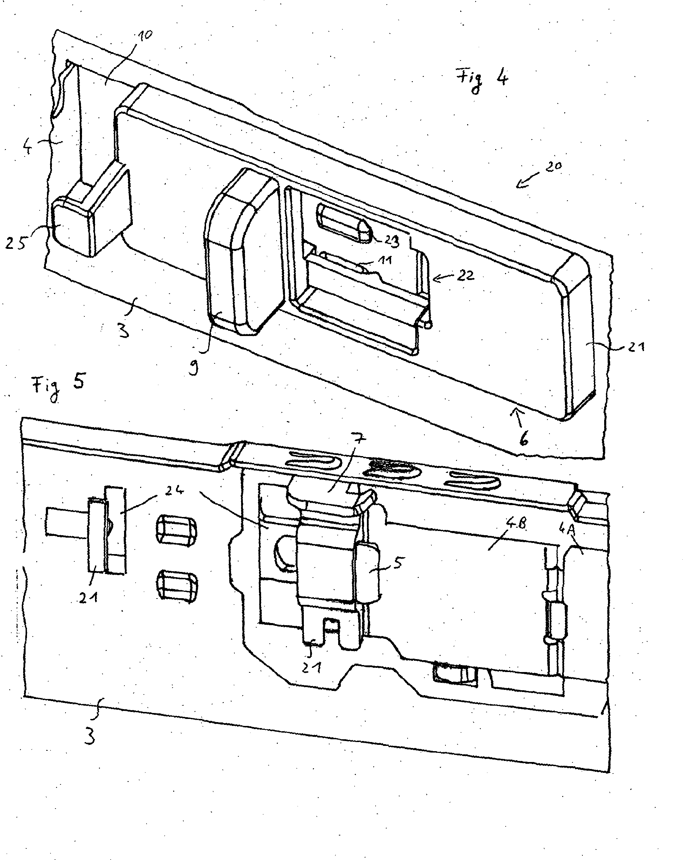

Figur 4 zeigt eine Rückansicht einer zweiten Ausgestaltung eines erfindungsgemäßen Computergehäuses 20. Die Gehäuserückseite 3 des Computergehäuses 20 weist einen Riegel 6 mit einem ersten Riegelelement 21 auf, der eine Haube 25 und einen Hebel 9 umfasst. Wie in der zuvor beschriebenen Ausgestaltung dient der Riegel 6 mit dem ersten Riegelelement 21 dazu, ein in eine Aussparung 10 eingesetztes Slotblech 4 mit Hilfe der Haube 25 zu verriegeln beziehungsweise wie in der Figur 4 dargestellt freizugeben.

Das erste Riegelelement 21 besitzt eine Aussparung 22, in die ein zweites Riegelelement eingesetzt werden kann, das in der Figur 4 jedoch nicht dargestellt ist. Durch die Aussparung 22 sieht man stattdessen ein erstes Rastelement 11, das zum Verrasten des ersten Riegelelementes dient, und ein zweites Rastelement 23, das zum Verrasten des zweiten Riegelelementes dient.

Figur 5 zeigt eine Innenansicht des Computergehäuses 20 im verriegelten Zustand. Ein zweites Halteelement 7 dient zur Verriegelung eines in der Figur 5 nicht dargestellten Gehäusedeckels 2.

In die Aussparung 10 der Gehäuserückseite 3 ist im Ausführungsbeispiel ein zeiteiliges Slotblech 4 eingesetzt, wie dies beispielsweise bei so genannten Kombikarten nach dem so genannten Low-Profile PCI-Standard üblich ist. Ein erstes Slotblechteil 4A gemäß den Abmessungen nach dem Low-Profile PCI-Standard ist direkt mit einer daran befestigten Einbaukomponente verbunden. Ein zweites Slotblechteil 4B verlängert das erste Slotblechteil 4A auf Länge eines Slotblechs 4 gemäß dem normalen PCI-Standard. Weil das zweite Slotblechteil 4B nicht direkt mit einer im Computergehäuse gehaltenen Einbaukomponente verbunden ist, bestünde die Gefahr, dass das zweite Slotblechteil 4B beim Öffnen des ersten Riegelelementes 21 heraus fiele, wenn es nicht zusätzlich durch ein erstes Halteelement 5 des zweiten Riegelelementes 24 gehalten würde.

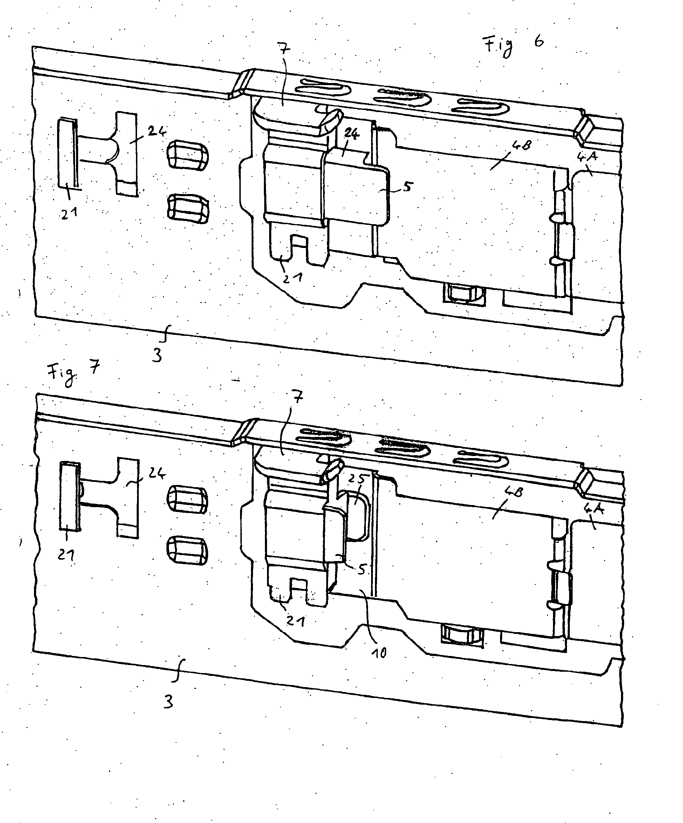

Figur 6 zeigt eine Innenansicht des Computergehäuses 20 im teilverriegelten Zustand, bei dem der Gehäusedeckel 2 des Computergehäuses 20 durch Zurückziehen des ersten Riegelelementes 21 entriegelt wurde. Das zweite Riegelelement 24, das sich lose eingesetzt zwischen dem ersten Riegelelement 21 und der Gehäuserückwand 3 befindet, wird jedoch noch durch das zweite Rastelement 23 in einer verriegelten Position gehalten, so dass das erste Halteelement 5 das zweite Slotblechteil 4B sich in der Aussparung 10 hält.

Figur 7 zeigt eine Innenansicht des Computergehäuses 20 im vollständig entriegelten Zustand. Zum Ein- oder Ausbau von Erweiterungsmodulen beziehungsweise Slotblechen 4, wird das zweite Riegelelement 24 mit dem daran befindlichen ersten Halteelement 5 zurückgezogen. Dies kann beispielsweise durch eine an dem zweiten Riegelelement 24 angebrachte Fingerleiste auf der Innen- oder Außenseite des Computergehäuses 20 erleichtert werden. Wie aus der Figur 7 ersichtlich wird, sind im vollständig entriegelten Zustand sowohl das erste Haltelement 5 als auch die Haube 25 vollständig zurückgezogen, so dass das Slotblech 4 freigegeben wird.

Aufgrund der besonderen Ausgestaltung und Anordnung des zweiten Riegelelementes 24 unter dem ersten Riegelelement 21 ist zugleich sichergestellt, dass bei einem Schließen des ersten Riegelelementes 21 das zweite Riegelelement 24 automatisch mit verriegelt wird, so dass ein Slotblech 4 bei verriegelten Gehäusedeckel 2 stets sicher gehalten wird.

### Bezugszeichenliste

- 1: Computergehäuse
- 2: Gehäusedeckel
- 3: Gehäuserückseite
- 4: Slotblech
- 5: erstes Halteelement
- 6: Riegel
- 7: zweites Halteelement
- 8: Lasche
- 9: Hebel
- 10: Aussparung
- 11: Rastelement
- 12: Slotblechwinkel

- 20: Computergehäuse
- 21: erstes Riegelelement
- 22: Aussparung
- 23: zweites Rastelement
- 24: zweites Riegelelement
- 25: Haube

## Patentansprüche

1. Computergehäuse (1, 20) mit
- einer Gehäuseseite (3), die wenigstens eine Aussparung (10) zum Einsetzen eines Erweiterungsmoduls (4) aufweist, und
- einem abnehmbaren Gehäusedeckel (2),
**dadurch gekennzeichnet, dass** das Computergehäuse (1, 20) einen Riegel (6) mit einem ersten Halteelement (5) und einem zweiten Halteelement (7) aufweist,
- der in einem verriegelten Zustand sowohl mittels des ersten Halteelements (5) ein in die Aussparung (10) eingesetztes Erweiterungsmodul (4) als auch mittels des zweiten Halteelements (7) den Gehäusedeckel (2) verriegelt, sodass ein in die Aussparung (10) eingesetztes Erweiterungsmodul (4) und der Gehäusedeckel (2) mit dem Gehäuse (1, 20) verbunden sind, und
- der in einem entriegelten Zustand sowohl ein in die Aussparung (10) eingesetztes Erweiterungsmodul (4) als auch den Gehäusedeckel (2) freigibt, sodass diese aus dem Gehäuse (1, 20) entfernt werden können.

2. Computergehäuse (1, 20) nach Anspruch 1,
**dadurch gekennzeichnet, dass**
der Riegel (6) einen Schieber mit einem Hebel (9) aufweist, wobei der Schieber mit dem Hebel (9) auf einer Gehäuseaußenseite (3) angeordnet ist und dazu eingerichtet ist, den Riegel (6) zu verriegeln bzw. zu entriegeln.

3. Computergehäuse (1, 20) nach Anspruch 2,
**dadurch gekennzeichnet, dass**
der Gehäusedeckel (2) wenigstens eine Lasche (8) aufweist, unter die das Halteelement (7) im verriegelten Zustand greift, um den Gehäusedeckel (2) mit dem Gehäuse (1) zu verbinden.

4. Computergehäuse (1, 20) nach einem der Ansprüche 1 bis 3, **dadurch gekennzeichnet, dass**
der Riegel (6) ein Rastelement (11) aufweist, das in dem verriegelten Zustand mit einem Gegenrastelement an der Gehäuseseite (3) verrastet.

5. Computergehäuse (20) nach einem der Ansprüche 1 bis 3, **dadurch gekennzeichnet, dass**
der Riegel (6) in einem teilverriegelten Zustand ein in die Aussparung (10) eingesetztes Erweiterungsmodul (4) verriegelt und den Gehäusedeckel (2) freigibt.

6. Computergehäuse (20) nach Anspruch 5, **dadurch gekennzeichnet, dass**
der Riegel (6) ein erstes Riegelelement (21) und ein zweites Riegelelement (24) aufweist, wobei das erste Riegelelement (21) den Gehäusedeckel (2) verriegelt oder freigibt und das zweite Riegelelement (24) das Erweiterungsmodul (4) verriegelt oder freigibt.

7. Computergehäuse (20) nach Anspruch 6, **dadurch gekennzeichnet, dass**
das erste Riegelelement (21) eine Aussparung (22) besitzt, in welcher das zweite Riegelelement (24) zwischen dem ersten Riegelelement (21) und der Gehäuseseite (3) lose angeordnet ist, und dass
eine Verriegelung des ersten Riegelelementes (21) eine Verriegelung des zweiten Riegelelementes (24) bewirkt.

8. Verwendung eines Computergehäuses (1, 20) nach einem der Ansprüche 1 bis 7 in einer Computeranordnung, aufweisend
- das Computergehäuse (1, 20),
- eine Hauptplatine, aufweisend einen Prozessor und eine Vorrichtung zum Anschluss von Erweiterungsmodulen (4), und
- wenigstens ein Erweiterungsmodul (4), das in die Aussparung (10) des Computergehäuses (1, 20) eingesetzt ist.

9. Verwendung nach Anspruch 8,
**dadurch gekennzeichnet, dass**
das Erweiterungsmodul (4) eine einsteckbare Slotabdeckung ist.

10. Verwendung nach Anspruch 8,
**dadurch gekennzeichnet, dass**
das Erweiterungsmodul (4) eine einsteckbare Erweiterungskarte ist.

11. Verwendung nach Anspruch 10,
**dadurch gekennzeichnet, dass**
die Vorrichtung zum Anschluss und die Erweiterungskarte (4) einem der folgenden Standards entsprechen: ISA, Vesa Local Bus, PCI, PCI-E, Low Profile PCI oder AGP.

## Claims

1. Computer housing (1, 20) having
- a housing face (3) which has at least one cutout (10) for inserting an expansion module (4), and
- a removable housing cover (2),
**characterized in that**
the computer housing (1, 20) has a bolt (6) with a first retaining element (5) and a second retaining element (7),
- which bolt, in a locked state, both locks an expansion module (4), which is inserted into the cutout (10), by means of the first retaining element (5) and also locks the housing cover (2) by means of the second retaining element (7), with the result that an expansion module (4), which is inserted into the cutout (10), and the housing cover (2) are connected to the housing (1, 20), and
- which bolt, in an unlocked state, releases both an expansion module (4), which is inserted into the cutout (10), and also the housing cover (2), with the result that the said expansion module and housing cover can be removed from the housing (1, 20).

2. Computer housing (1, 20) according to Claim 1, **characterized in that**
the bolt (6) has a slide having a lever (9), with the slide having the lever (9) being arranged on a housing outer face (3) and being designed to lock and unlock the bolt (6).

3. Computer housing (1, 20) according to Claim 2, **characterized in that**
the housing cover (2) has at least one lug (8) beneath which the retaining element (7) engages in the locked state in order to connect the housing cover (2) to the housing (1).

4. Computer housing (1, 20) according to one of Claims 1 to 3,
**characterized in that**
the bolt (6) has a latching element (11) which latches with a mating latching element on the housing face (3) in the locked state.

5. Computer housing (20) according to one of Claims 1 to 3, **characterized in that**
the bolt (6), in a partially locked state, locks an expansion module (4), which is inserted into the cutout (10), and releases the housing cover (2).

6. Computer housing (20) according to Claim 5, **characterized in that**
the bolt (6) has a first bolt element (21) and a second bolt element (24), with the first bolt element (21) locking or releasing the housing cover (2) and the second bolt element (24) locking or releasing the expansion module (4).

7. Computer housing (20) according to Claim 6, **characterized in that**
the first bolt element (21) has a cutout (22) in which the second bolt element (24) is loosely arranged between the first bolt element (21) and the housing face (3), and **in that** locking of the first bolt element (21) causes locking of the second bolt element (24).

8. Use of a computer housing (1, 20) according to one of Claims 1 to 7 in a computer arrangement, comprising
- the computer housing (1, 20),
- a main printed circuit board comprising a processor and an apparatus for connecting expansion modules (4), and
- at least one expansion module (4) which is inserted into the cutout (10) in the computer housing (1, 20).

9. Use according to Claim 8,
**characterized in that**
the expansion module (4) is a slot covering which can be plugged in.

10. Use according to Claim 8,
**characterized in that**
the expansion module (4) is an expansion card which can be plugged in.

11. Use according to Claim 10,
**characterized in that**
the connection apparatus and the expansion card (4) meet one of the following standards: ISA, Vesa Local Bus, PCI, PCI-E, Low Profile PCI or AGP.

## Revendications

1. Boîtier d'ordinateur (1, 20) comprenant
- un côté de boîtier (3) qui présente au moins un évidement (10) pour l'insertion d'un module d'extension (4)
et
- un couvercle de boîtier (2) amovible,
**caractérisé en ce que**
le boîtier d'ordinateur (1, 20) présente un verrou (6) muni d'un premier élément de maintien (5) et d'un deuxième élément de maintien (7),
- lequel, à l'état verrouillé, verrouille à la fois un module d'extension (4), inséré dans l'évidement (10), au moyen du premier élément de maintien (5) et le couvercle de boîtier (2) au moyen du deuxième élément de maintien (7),
de sorte qu'un module d'extension (4) inséré dans l'évidement (10) et le couvercle de boîtier (2) sont reliés avec le boîtier (1, 20), et
- lequel, à l'état déverrouillé, libère à la fois un module d'extension (4) inséré dans l'évidement (10) et le couvercle de boîtier (2), de sorte que ceux-ci puissent être retirés hors du boîtier (1, 20).

2. Boîtier d'ordinateur (1, 20) selon la revendication 1, **caractérisé en ce que** le verrou (6) présente un curseur muni d'un levier (9), le curseur muni du levier (9) étant disposé sur un côté extérieur du boîtier (3) et étant configuré pour verrouiller ou déverrouiller le verrou (6).

3. Boîtier d'ordinateur (1, 20) selon la revendication 2, **caractérisé en ce que** le couvercle de boîtier (2) présente au moins une éclisse (8) sous laquelle vient en prise l'élément de maintien (7) à l'état verrouillé afin de relier le couvercle de boîtier (2) avec le boîtier (1).

4. Boîtier d'ordinateur (1, 20) selon l'une des revendications 1 à 3, **caractérisé en ce que** le verrou (6) présente un élément à enclenchement (11) qui, à l'état verrouillé, s'enclenche avec un contre-élément d'enclenchement sur le côté de boîtier (3).

5. Boîtier d'ordinateur (20) selon l'une des revendications 1 à 3, **caractérisé en ce que** le verrou (6), dans un état partiellement verrouillé, verrouille un module d'extension (4) inséré dans l'évidement (10) et libère le couvercle de boîtier (2).

6. Boîtier d'ordinateur (20) selon la revendication 5, **caractérisé en ce que** le verrou (6) présente un premier élément de verrou (21) et un deuxième élément de verrou (24), le premier élément de verrou (21) verrouillant ou libérant le couvercle de boîtier (2) et le deuxième élément de verrou (24) verrouillant ou libérant le module d'extension (4).

7. Boîtier d'ordinateur (20) selon la revendication 6, **caractérisé en ce que** le premier élément de verrou (21) possède un évidement (22) dans lequel le deuxième élément de verrou (24) est disposé de manière lâche entre le premier élément de verrou (21) et le côté de boîtier (3), et **en ce qu'**un verrouillage du premier élément de verrou (21) provoque un verrouillage du deuxième élément de verrou (24).

8. Utilisation d'un boîtier d'ordinateur (1, 20) selon l'une des revendications 1 à 7 dans un arrangement d'ordinateur qui présente
- le boîtier d'ordinateur (1, 20),
- une carte-mère présentant un processeur et un dispositif de raccordement de modules d'extension (4) et
- au moins un module d'extension (4) qui est inséré dans l'évidement (10) du boîtier d'ordinateur (1, 20).

9. Utilisation selon la revendication 8, **caractérisée en ce que** le module d'extension (4) est un cache-emplacement enfichable.

10. Utilisation selon la revendication 8, **caractérisée en ce que** le module d'extension (4) est une carte d'extension enfichable.

11. Utilisation selon la revendication 10, **caractérisée en ce que** le dispositif de raccordement et la carte d'extension (4) sont conformes à l'une des normes suivantes: ISA, Vesa Local Bus, PCI, PCI-E, Low Profile PCI ou AGP.
